# EUROPÄISCHE PATENTSCHRIFT

(11) **EP 0 983 166 B1**
(45) Veröffentlichungstag und Bekanntmachung des Hinweises auf die Patenterteilung: **21.03.2001**
(21) Anmeldenummer: 98934750.5
(22) Anmeldetag: 19.05.1998
(51) Int. Cl.: B60R 16/02, B60R 21/32

(54) **VERFAHREN UND VORRICHTUNG ZUR ÜBERTRAGUNG VON DIGITALEN DATEN VON EINER MESSSTATION EINES INSASSENSCHUTZSYSTEMS EINES KRAFTFAHRZEUGS ZU EINEM AIRBAGSTEUERGERÄT**
METHOD AND DEVICE FOR TRANSMITTING DIGITAL DATA FROM A MEASURING STATION IN A MOTOR VEHICLE OCCUPANT PROTECTION SYSTEM TO AN AIR BAG CONTROL DEVICE
PROCEDE ET DISPOSITIF POUR TRANSMETTRE DES DONNEES NUMERIQUES ENTRE UN POSTE DE MESURE D'UN SYSTEME DE PROTECTION DES OCCUPANTS D'UN VEHICULE A MOTEUR ET UN APPAREIL DE COMMANDE D'AIRBAG

(30) Priorität: 21.05.1997 DE 19721304
(43) Veröffentlichungstag der Anmeldung: 08.03.2000
(73) Patentinhaber: SIEMENS AKTIENGESELLSCHAFT, 80333 München (DE)
(72) Erfinder: HERMANN, Stefan, D-93096 Köfering (DE)
(86) Internationale Anmeldenummer: DE9801380
(87) Internationale Veröffentlichungsnummer: WO9852792

(56) Entgegenhaltungen:
- EP-A- 0 384 258
- DE-A- 3 811 217
- DE-A- 4 201 468
- DE-A- 19 526 809

## Beschreibung

Verfahren und Vorrichtung zur Übertragung von digitalen Daten von einer Meßstation eines Insassenschutzsystems eines Kraftfahrzeugs zu einem Airbagsteuergerät

Die vorliegende Erfindung betrifft ein Verfahren und eine Vorrichtung zur Übertragung von digitalen Daten von einer Meßstation eines Insassenschutzsystems eines Kraftfahrzeugs zu einem Airbagsteuergerät gemäß den Oberbegriffen der Ansprüche 1 beziehungsweise 7.

Für Auslöseschaltungen von Insassenschutzsystemen, die beispielsweise Airbags oder Gurtstraffer bei einem Unfall zum Auslösen bringen, müssen von entfernt angeordneten Sensoren (Meßstationen) Signale zu einer zentralen Steuereinheit (Airbagsteuergerät) übertragen werden. Mit zunehmender Weiterentwicklung der Insassenschutzsysteme werden die zugehörigen Sensoren an immer mehr Stellen im Kraftfahrzeug eingebaut. Um die erforderlichen kurzen Auslösezeiten einhalten zu können, müssen diese entfernt angeordneten Sensoren ständig abgefragt werden und die Sensorsignale zuverlässig zur zentralen Steuereinheit übertragen werden.

In der EP 0 693 401 A2 ist ein Datenübertragungsverfahren vorgeschlagen worden, bei dem von den betreffenden entfernt angeordneten Sensoren pulsdauermodulierte Signale erzeugt und zur zentralen Steuereinheit übertragen werden. Die Dateninformation ist über das Tastverhältnis codiert.

Bei einer Anordnung zur Steuerung eines Insassenschutzmittels wie eines Airbags ist der Betrieb der gesamten Anordnung auch noch für eine Mindestzeit nach einem Aufprall aufrechtzuerhalten, bei dem das Bornetz und damit die Energieversorgung der Anordnung zerstört wurde. Dafür sind gewöhnlich in dem Airbagsteuergerät entsprechende selbständige Energiereserven wie Kondensatoren für die einzelnen Schaltungsteile bereitgestellt, um diesen Notbetrieb für eine Mindestzeit gewährleisten zu können. Derartige Energiespeicher sind nicht nur kostenintensiv sondern beanspruchen auch Bauraum.

Der Erfindung liegt die Aufgabe zugrunde, ein Verfahren und eine Vorrichtung für ein Insassenschutzsytem eines Kraftfahrzeug anzugeben, durch die die Energiereserven für den Notbetrieb verringert werden können.

Diese Aufgabe ist erfindungsgemäß durch ein Verfahren und eine Vorrichtung mit den Merkmalen der Ansprüche 1 bzw. 7 gelöst.

Erfindungsgemäß wird dabei der Stromverbrauch bei der Datenübertragung von der Meßstation zum Airbagsteuergerät verringert.

Bei dem aus der EP 0 693 401 A2 bekannten Datenübertragungsverfahren hat das Sensorsignal zwei Strompegelwerte, nämlich einen H- und einen L-Pegel (auch "Logische Eins" und "Logische Null" genannt). Der L-Pegel entspricht dabei dem Ruhestrom der Sensorbaugruppe. Hat das Sensorsignal den H-Pegel, so ist der Stromverbrauch höher als in dem Fall des L-Pegels. Bei einem Tastverhältnis von 50 % beträgt dann der Mittelwert des übertragenen Sensorsignals 1/2, wenn der H-Pegel 1 und der L-Pegel 0 ist. Das übertragene Signal hat somit stets eine Gleichstromkomponente. Diese Gleichstromkomponente wird in Widerständen der Sensorbaugruppe durch Umwandlung in Wärmeenergie verbraucht. Um andererseits eine zuverlässige Signalübertragung zu gewährleisten, muß jedoch der H-Pegel ausreichend hoch sein. Der so gewählte hohe H-Pegel bringt einen hohen Stromverbrauch der betreffenden Baugruppe für die Signalübertragung mit sich.

Durch das erfindungsgemäße Herausmitteln der Stromänderungen ergibt sich, daß die für die Datenübertragung erforderliche Gleichstromkomponente Null ist. Damit ist der Energiebedarf für die Signalubertragung verhältnismäßig gering und entsprechend kann die Stromversorgung für die externen Meßstationen im Notbetrieb und damit auch die bereitzustellenden Energiereserven klein gehalten werden. Die für die jeweilige Meßstation bereitgestellte Energie muß dann insbesondere nicht größtenteils für die Kommunikation mit dem Airbagsteuergerät zur Verfügung gestellt werden.

Vorteilhaft erfolgen Signalübertragung und Stromversorgung über eine gemeinsame Leitung.

Die Verwendung der Begriffe Airbagsteuergerät und Meßstation ist lediglich beispielhaft. So kann beispielsweise das erfin-dungsgemäße Verfahren auch zwischen zwei Insassenschutzsteu-ereinheiten eines Kraftfahrzeugs Anwendung finden. Die Meßstation kann einen Sensor zum Erkennen eines Aufpralls enthalten und Sensorsignale übertragen oder auch als Zündstation für ein Insassenschutzmittel ausgebildet sein, die im Zündbe-trieb einen Auslösebefehl von dem Airbagsteuergerät erthält und daraufhin ein Zündelement eines Schutzmittels aufheizt. Dabei überträgt die als Zündstation ausgebildete Meßstation Diagnosemeßergebnisse an das Airbagsteuergerät.

Vorteilhafte weitere Ausgestaltungen der Erfindung sind Gegenstand der Unteransprüche.

Ein Ausführungsbeispiel der Erfindung wird im folgenden anhand der Zeichnung erläutert. Es zeigen
- Figur 1: ein Blockschaltbild eines Ausführungsbeispiels einer erfindungsgemäßen Vorrichtung.
- Figur 2 a) bis f): ein Zeitdiagramm, das bei der Datenüber tragung mit der Vorrichtung von Figur 1 auftretende Impulsfolgen veranschaulicht.

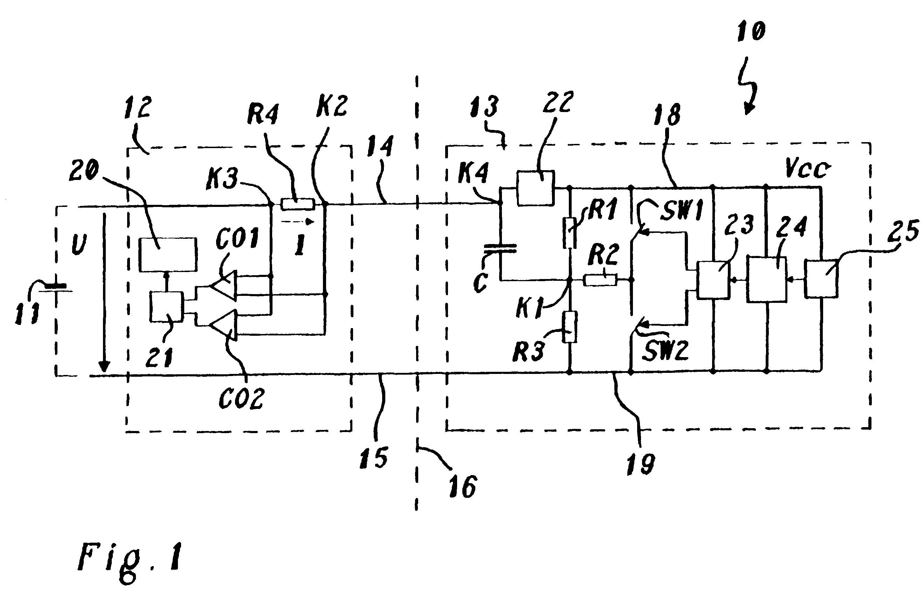

Es wird nun als erstes ein Blockschaltbild einer erfindungs-gemäßen Vorrichtung in Form eines Airbagsystems 10 für einen Airbag anhand von Figur 1 erläutert. Das Airbagsystem 10 um-faßt ein Airbagsteuergerät 12 und eine Meßstation 13, die über eine Stromschnittstelle 16 mit den Zuleitungen 14 und 15 in Verbindung stehen. Innerhalb der Meßstation 13 ist ein Sensor 25 zur Aufprallerkennung für den zugehörigen (nicht gezeigten) Airbag angeordnet, der über die Stromschnittstelle 16 mit Strom aus einer Gleichstromquelle, im vorliegenden Fall der Autobatterie 11, versorgt wird. Der Sensor 25 ist an eine Überwachungseinheit 24, z.B. einen mit A/D-Wandler versehenen Mikroprozessor, angeschlossen, die (analoge) Signale vom Sensor 25 empfängt, in eine Folge von digitalen lbinären) Daten umwandelt und in vorgebenen Zeitabständen zum Airbagsteuergerät 12 überträgt.

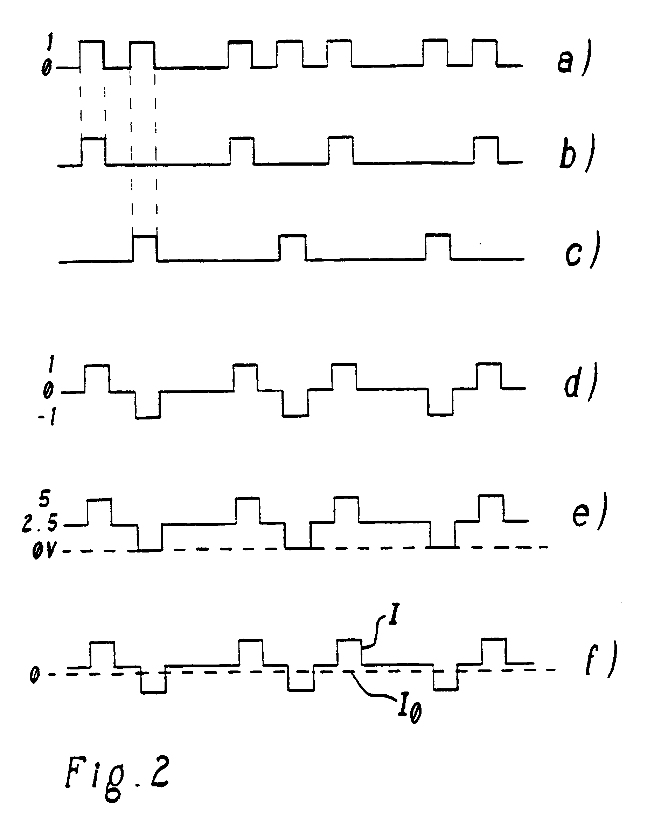

Die Übertragung der Daten erfolgt direkt über die Stromschnittstelle 16, indem der durch die Stromschnittstelle fließende Gleichstrom nach Maßgabe der Datenfolge moduliert wird. Die Strommodulation wird in einem in dem Airbagsteuergerät 12 in die Zuleitung 14 eingesetzten Serienwiderstand R4 als Spannungsabfall von zwei Komparatoren CO1 und C02 detektiert und an eine Dekodiereinheit 21 weiergeleitet. Das deko-dierte Datensignal wird dann einer Auswerteeinheit 20 zugeführt und dort ausgewertet. Die Modulation des Stroms I durch den Widerstand R4 erfolgt so, daß sich die durch die Modulation hervorgerufenen Stromänderungen im zeitlichen Mittel aufheben, also die aus der Datenübertragung resultierende Gleichstromkomponente Null ist. Dies wird vorzugsweise dadurch erreicht, daß nach Art einer AMI-Codierung (Alternate-Mark-Inversion) jeder zweite "1"-Wert einer zu übertragenden binären Datenfolge aus "0"- und "1"-Werten, wie sie beispielhaft in Figur 2 a) dargestellt ist, gemäß Figur 2 d) in einen "-1"-Wert umgesetzt wird. Da im zeitlichen Mittel dann immer gleich viel positive, d.h. "1"-Werte und negative, d.h. "-1"-Werte auftreten, ergibt sich - wenn der "1"-Wert einer Stromerhöhung und der "-1"-Wert einer gleich großen Stromerniedrigung bzw. Stromumkehrung entsprechen - ein verschwindender Gleichstromwert.

Die der AMI-Codierung entsprechende Strommodulation in der Stromschnittstelle 16 wird bei dem Schaltungsbeispiel aus Figur 1 auf folgende Weise erreicht: In der Meßstation 13 wird aus der Batteriespannung U der Batterie 11 mittels eines in Serie liegenden Spannungsreglers 22 eine für den Sensor 25 und die übrige Elektronik erforderliche Versorgungsspannung Vcc, vorzugsweise 5 V, abgeleitet und zwischen Masseleitung 19 und Versorgungsleitung 18 zur Verfügung gestellt. Für die Strommodulation ist ein Energiespeicher vorgesehen, der zur Stromerhöhung aus der Stromschnittstelle 16 geladen, und zur Stromerniedrigung in die Stromschnittstelle 16 entladen wird. Als Energiespeicher ist in Beispiel ein Kondensator C (z.B. 1 µF) vorgesehen, der zwischen dem Eingang des Spannungsreglers und dem Mittelabgriff(Knotenpunkt K1) eines aus zwei Widerständen R1 und R3 gebildeten Spannungsteilers angeschlossen ist. Der Spannungsteiler ist zwischen den Leitungen 18 und 19 angeordnet. Die beiden Widerstände R1 und R3 sind gleich (z.B. 10 kÛ), so daß der Knotenpunkt K1 auf einer Spannung von Vcc/2 bzw. 2,5 V liegt.

Der Knotenpunkt K1 kann nun zur Strommodulation mittels zweier Schalter SW1 und SW2 über einen weiteren, deutlich kleineren Widerstand R2 (z.B. 100 Û) wahlweise durch Schließen des Schalters SW1 auf das Potential der Versorgungsleitung 18 (Vcc) oder durch Schließen des Schalters SW2 auf das Potential der Masseleitung 19 gelegt werden. Damit verschiebt sich das Potential am Knotenpunkt K1 um +/- 2,5 V. Entsprechend verschiebt sich auch das Potential am Knotenpunkt K4 auf der anderen Seite des Kondensators C. Wird das Potential bei K4 durch Schließen des Schalters SW1 um 2,5 V nach oben verschoben, entlädt sich der im Ruhezustand aufgeladene Kondensator C in die Stromschnittstelle 16 und der Strom I durch den Widerstand R4 (z.B. 10 Û) erniedrigt sich bzw. kehrt sich um. Wird das Potential bei K4 durch Schließen des Schalters SW2 um 2,5 V abgesenkt, lädt sich der Kondensator C aus der Stromschnittstelle 16 weiter auf und es fließt ein zusätzlicher Ladestrom durch den Widerstand R4.

Um nun gemäß der Erfindung die beispielhafte Datenfolge aus Figur 2 a) mit verschwindendem Gleichstromanteil über die Stromschnittstelle 16 übertragen zu können, wird die binäre Signalfolge nach Figur 2a) in zwei Teilfolgen gemaß Figur 2 b) und c) zerlegt. Die eine Teilfolge enthält jedes zweite "1"-Signal, die andere Teilfolge enthält die übrigen, d.h. dazwischenliegenden "1"-Signale. Diese Aufteilung der Signalfolge wird in der Schaltung aus Figur 1 in einer Ansteuereinheit 23 vorgenommen, die auch Teil des o.g. Mikroprozessors sein kann. Die Ansteuereinheit 23 hat zwei Ausgänge, an denen jeweils eine der beiden Teilfolgen aus Figur 2 b), c) ansteht und an einen der Schalter SW1 und SW2 zur Ansteuerung weitergeleitet wird. Tritt in der Teilfolge des oberen Ausgangs ein "1"-Wert auf, wird der Schalter SW1 geschlossen. Tritt in der Teilfolge des unteren Ausgangs ein "1"-Wert auf, wird der Schalter SW2 geschlossen. Tritt dagegen ein "0"-Wert auf, bleiben beide Schalter offen.

Durch das abwechselnde Schließen der Schalter SW1 und SW2 bei aufeinanderfolgenden "1"-Werten tritt die o.g. Potentialverschiebung am Knotenpunkt K1 auf und es ergibt sich ein Spannungsverlauf, wie er in Figur 2 e) wiedergegeben ist. Entsprechend diesem Spannungsverlauf schwankt der Strom I in der Stromschnittstelle 16 bzw. durch den Widerstand R4 in der in Figur 2 f) dargestellten Weise um den Ruhestrom I . Der Verlauf des Stroms I entspricht damit dem AMI-Signal₀ aus Figur 2 d).

An den Knotenpunkten K2 und K3 am Serienwiderstand R4 werden diese Stromänderungen in entsprechende Änderungen des Spannungsabfalls umgesetzt. Die positiven Änderungen werden durch einen ersten Komparator CO1, die negativen Änderungen durch einen zweiten Komparator CO2 detektiert. An den Ausgängen der Komparatoren CO1 und CO2 stehen dann wieder die Teilsignalfolgen gemäß Figur 2 b) und c) zur Verfügung, die in der nachfolgenden Dekodiereinheit 21 zum ursprünglichen Datensignal (Figur 2 a)) zusammengesetzt und zur Auswerteeinheit weitergeleitet werden.

Die Erfindung wird vorzugsweise verwendet bei Anordnungen zum Steuern eines Insassenschutzsystems, da für diese sicherheitskritischen Anwendung Reserveenergiespeicher zum ordnungsgemäßen Betrieb der Anordnung auch nach ihrem Abtrennen vom Bordnetz bereitgestellt werden müssen. Insbesondere findet die erfindungsgemäße Stromschnittstelle Verwendung bei der Datenübertragung zwischen einem ausgelagerten Aufprallsensor und einer zentral angeordneten Auswerteeinheit, aber auch zwischen einer solchen Auswerteeinheit und einer ausgelagerten, bei dem Insassenschutzmittel angeordneten Zündeinheit, an die die Auswerteeinheit zum Zünden des Insassenschutzmittels einen codierten Zündbefehl übermittelt, der in der Zündeinheit ausgewertet wird und die Beaufschlagung eines Zündelements des Insassenschutzmittels mit Energie bewirkt.

## Patentansprüche

1. Verfahren zur Übertragung von digitalen Daten von einer Meßstation (13) eines Insassenschutzsystems eines Kraftfahrzeugs zu einem Airbagsteuergerät (12),
- bei dem die Meßstation (13) aus einer Gleichstrom- oder Gleichspannungsquelle (11) des Airbagsteuergeräts (12) mit einem Gleichsignal versorgt wird,
- bei dem die Meßstation (13) das Gleichsignal (I) nach Maßgabe der zu übertragenden Daten verändert, und
- bei dem die Veränderungen des Gleichsignals (I) als Stromänderungen in dem Airbagsteuergerät (12) erkannt und ausgewertet werden,
**dadurch gekennzeichnet,**
- daß die Veränderungen des Stroms (I) derart durchgeführt werden, daß sich die Veränderungen im zeitlichen Mittel gegenseitig aufheben.

2. Verfahren nach Anspruch 1, dadurch gekennzeichnet,
- daß die zu übertragenden digitalen Daten in Form einer Folge von Binärzeichen übertragen werden,
- daß zur Übertragung einer logischen Null das Gleichsignal (I) unverändert gelassen wird, und
- daß zur Übertragung einer logischen Eins das Gleichsignal (I) um einen vorbestimmten Betrag erhöht oder erniedrigt wird,
- wobei das Gleichsignal (I) erhöht wird, wenn das Gleichsignal (I) zur Übermittlung der vohergehenden logischen Eins erniedrigt wurde, und
- wobei das Gleichsignal (I) erhöht wird, wenn das Gleichsignal (I) zur Übermittlung der vohergehenden logischen Eins erniedrigt wurde.

3. Verfahren nach Anspruch 2, dadurch gekennzeichnet, daß in der Meßstation (13) ein Energiespeicher (C) vorgesehen ist, und daß der Energiespeicher (C) zur Erhöhung des Stroms (I) geladen und zur Erniedrigung des Stroms (I) entladen wird.

4. Verfahren nach Anspruch 3, dadurch gekennzeichnet, daß als Energiespeicher ein Kondensator (C) verwendet wird.

5. Verfahren nach einem der Ansprüche 3 und 4, dadurch gekennzeichnet, daß zur Steuerung der Ladung bzw. Entladung des Energiespeichers (C) zwei Schalter (SW1, SW2) verwendet werden, und daß die Schalter (SW1, SW2) bei aufeinanderfolgenden logischen Eins-Werten der Datenfolge abwechselnd angesteuert werden.

6. Verfahren nach einem der Ansprüche 1 bis 5, dadurch gekennzeichnet, daß airbagsteuergeräteseitig in wenigstens einer Zuleitung (14) zur Meßstation ein Widerstand (R4) in Serie geschaltet ist, und daß zur Ermittlung der übertragenen Daten der Spannungsabfall an dem Serienwiderstand (R4) gemessen wird.

7. Vorrichtung zur Übertragung von digitalen Daten in einem Kraftfahrzeug, insbesondere zur Durchführung des Verfahrens nach Anspruch 1,
- mit einem Airbagsteuergerät (12) und mit einer mit dem A bagsteuergerät (12) verbundenen Meßstation (13)
- mit einer Gleichstrom- oder Gleichspannungsquelle (11) im Airbagsteuergerät (12) zum Versorgen der Meßstation (13) mit einem Gleichsignal (I),
- mit ersten Mitteln (C; R1, R2, R3; SW1, SW2; 23) in der Meßstation (13) zum Verändern des Gleichsignals (I) nach Maßgabe der zu übertragenden Daten, und
- mit zweiten Mitteln (R4; CO1, CO2; 21) im Airbagsteuergerät (12) zum Erkennen und Auswerten von Änderungen des Gleichsi gnals (I) als Stromänderungen,
**dadurch gekennzeichnet,**
- daß die ersten Mittel einen Energiespeicher (C) umfassen, der zur Erhöhung des Stroms (I) gesteuert geladen und zur Erniedrigung des Stroms (I) gesteuert entladen wird.

8. Vorrichtung nach Anspruch 7, dadurch gekennzeichnet, daß der Energiespeicher als Kondensator (C) ausgebildet ist.

9. Vorrichtung nach Anspruch 8, dadurch gekennzeichnet, daß die Meßstation (13) mit einer Versorgungsspannung (Vcc) versorgt wird, daß der Kondensator (C) in der Meßstation (13) so angeordnet ist, daß er bei fehlender Datenübertragung auf eine zwischen 0 V und der Versorgunsspannung (Vcc) liegende Zwischenspannung aufgeladen ist, daß die ersten Mittel zwei Schalter (SW1, SW2) umfassen, daß durch Bestätigen des ersten Schalters (SW1) der Kondensator (C) eine Erhöhung des Gleichsignals verursacht, und daß durch Betätigen des zweiten Schalters (SW2) der Kondensator (C) eine Erniedrigung des Gleichsignals verursacht.

10. Vorrichtung nach Anspruch 9, dadurch gekennzeichnet, daß die Meßstation (13) einen Spannungsregler (22) zum Ableiten der Versorgungsspannung aus dem Gleichsignal aufweist, daß die Meßstation (13) einen mit der Versorgunsspannung (Vcc) beaufschlagten Spannungsteiler mit einem ersten und einem zweiten Widerstand (R1, R3) enthält, die in einem als Mittelabgriff wirkenden Knotenpunkt (K1) miteinander verbunden sind, daß der Kondensator (C) zwischen dem Eingang des Spannungsreglers (22) und dem Mittelabgriff (K1) des Spannungsteilers (R1, R3) angeschlossen ist,-und daß der erste Schalter (SW1) zum ersten Widerstand (R1) und der zweite Schalter (SW2) zum zweiten Widerstand (R3) parallel geschaltet ist.

11. Vorrichtung nach Anspruch 10, dadurch gekennzeichnet, daß die Schalter (SW1, SW2) über einen gemeinsamen Widerstand (R2) mit dem Mittelabgriff (K1) verbunden sind.

12. Vorrichtung nach einem der Ansprüche 9 bis 11, dadurch gekennzeichnet, daß die ersten Mittel eine Ansteuereinheit (23) umfassen, die nach Maßgabe der zu übertragenen Datenfolge die Schalter (SW1, SW2) ansteuert.

13. Vorrichtung nach Anspruch 12, dadurch gekennzeichnet, daß die Meßstation eine Sensor (25) enthält, der mit einer Überwachungseinheit (24) in Verbindung steht, und daß die Überwachungseinheit (24) nach Maßgabe von Signalen aus dem Sensor (25) die zu übertragenen Datenfolgen erzeugt und zur Übertragung an die Ansteuereinheit (23) weiterleitet.

## Claims

1. Method for transmitting digital data from a measuring station (13) of an occupant protection system of a motor vehicle to an airbag controller 12),
- where the measuring station (13) is supplied with a DC signal from a direct current or direct voltage source (11) of the airbag controller (12),
- where the measuring station (13) modifies the DC signal (I) in accordance with the data to be transmitted, and
- where the modifications to the DC signal (I) are recognised and evaluated as changes in the current in the airbag controller (12),
characterised in that the changes in the current (I) are brought about in such a way that the changes cancel each other out on average by time.

2. Method in accordance with Claim 1, characterised in that
- the digital data to be transmitted is transmitted in the form of a sequence of binary symbols,
- to transmit a logical zero the DC signal (I) is left unchanged, and
- to transmit a logical one the DC signal (I) is increased or decreased by a predetermined amount,
- where the DC signal (I) is increased if the DC signal (I) was decreased to convey the preceding logical one, and
- where the DC signal (I) is increased if the DC signal (I) was decreased to convey the preceding logical one.

3. Method in accordance with Claim 2, characterised in that an energy storage device (C) is provided in the measuring station (13), and the energy storage device (C) is charged to increase the current (I) and discharged to decrease the current (I).

4. Method in accordance with Claim 3, characterised in that a condenser (C) is used as energy storage device.

5. Method in accordance with one of the Claims 3 and 4, characterised in that two switches (SW1, SW2) are used to control the charging and discharging of the energy storage device (C), and the switches (SW1, SW2) are addressed alternately for consecutive logical one values of the data sequence.

6. Method in accordance with one of the Claims 1 to 5, characterised in that in the airbag controller there is a resistor (R4) wired in series in at least one supply line (14) to the measuring station, and the voltage drop is measured at the series resistor (R4) to determine the transmitted data.

7. Device for transmitting digital data in a motor vehicle, especially for carrying out the procedure in accordance with Claim 1,
- with an airbag controller (12) and a measuring station (13) connected to the airbag controller (12),
- with a direct current or direct voltage source (11) in the airbag controller (12) to supply the measuring station (13) with a DC signal (I),
- with first devices (C; R1, R2, R3; SW1, SW2; 23) in the measuring station (13) to modify the DC signal (I) in accordance with the data to be transmitted, and
- with second devices (R4; CO1, CO2; 21) in the airbag controller (12) to recognise and evaluate changes in the DC signal (I) as changes in current,
characterised in that
- the first devices include an energy storage device (C), which is charged under control to increase the current (I) and discharged under control to reduce the current (I).

8. Device in accordance with Claim 7, characterised in that the energy storage device is in the form of a condenser (C).

9. Device in accordance with Claim 8, characterised in that the measuring station (13) is fed a supply voltage (Vcc); the condenser (C) in the measuring station (13) is set up in such a way that when there is no data transmission it is charged to an intermediate voltage which lies between 0 V and the supply voltage (Vcc); the first devices include two switches (SW1, SW2); when the first switch (SW1) is activated the condenser (C) causes an increase in the DC signal, and when the second switch (SW2) is activated the condenser (C) causes a decrease in the DC signal.

10. Device as in Claim 9, characterised in that the measuring station (13) has a voltage regulator (22) to draw the supply voltage from the DC signal; the measuring station (13) includes a voltage divider with the supply voltage (Vcc) applied, with a first and a second resistor (R1, R3) which are connected to each other in a node (K1) which functions as a centre tap; the condenser (C) is connected between the input of the voltage regulator (22) and the centre tap (K1) of the voltage divider (R1, R3); and the first switch (SW1) is wired parallel to the first resistor (R1) and the second switch (SW2) parallel to the second resistor (R3).

11. Device in accordance with Claim 10, characterised in that the switches (SW1, SW2) are connected to the centre tap (K1) through a common resistor (R2).

12. Device in accordance with one of the Claims 9 to 11, characterised in that the first devices include a control unit (23) which addresses the switches (SW1, SW2) in accordance with the sequence of data to be transmitted.

13. Device in accordance with Claim 12, characterised in that the measuring station includes a sensor (25) which is connected to a watchdog unit (24), and the watchdog unit (24) generates the data sequences to be transmitted in accordance with signals from the sensor (25) and forwards them to the control unit (23) for transmission.

## Revendications

1. Procédé de transmission de données numériques, d'un poste de mesure (13) d'un système de protection de passager d'un véhicule automobile à un appareil de commande de sac gonflable de protection (12),
- selon lequel le poste de mesure (13) est alimenté au moyen d'un signal continu à partir d'une source de courant continu ou de tension continue (11) de l'appareil de commande de sac gonflable de protection (12),
- selon lequel le poste de mesure (13) modifie le signal continu (I) en fonction des données à transmettre et
- selon lequel les modifications du signal continu (I) sont reconnues et analysées en tant que modifications de courant dans l'appareil de commande de sac gonflable de protection (12),
caractérisé
- en ce que les variations du courant (I) sont effectuées d'une manière telle que les modifications s'équilibrent mutuellement en moyenne dans le temps.

2. Procédé suivant la revendication 1, caractérisé
- en ce que les données numériques à transmettre sont transmises sous forme d'une série de signaux binaires,
- en ce que, pour la transmission d'un zéro logique, le signal continu (I) est laissé inchangé et
- en ce que, pour la transmission d'un un logique, le signal continu (I) est augmenté ou abaissé d'une valeur préfixée,
- le signal continu (I) étant augmenté lorsque le signal continu (I) a été abaissé pour la transmission du un logique précédent et
- le signal continu (I) étant augmenté lorsque le signal continu (I) a été abaissé pour la transmission du un logique précédent.

3. Procédé suivant la revendication 2, caractérisé en ce que, dans le poste de mesure (13), il est prévu un accumulateur d'énergie (C) et en ce que l'accumulateur d'énergie (C) est chargé pour l'augmentation du courant (I) et déchargé pour la diminution du courant (I).

4. Procédé suivant la revendication 3, caractérisé en ce qu'un condensateur (C) est utilisé en tant qu'accumulateurs d'énergie.

5. Procédé suivant l'une des revendications 3 et 4, caractérisé en ce que deux interrupteurs (SW1, SW2) sont utilisés pour la commande de la charge ou la décharge de l'accumulateur d'énergie (C) et en ce que les interrupteurs (SW1, SW2) sont commandés d'une manière alternée pour des valeurs successives de un logique de la suite de données.

6. Procédé suivant l'une des revendications 1 à 5, caractérisé en ce que, du côté de l'appareil de commande de sac gonflable de protection, une résistance (R4) est connectée en série dans au moins une ligne (14) menant au poste de mesure et en ce que la chute de tension aux bornes de la résistance série (R4) est mesurée pour la détermination des données transmises.

7. Dispositif de transmission de données numériques dans un véhicule automobile, notamment pour la mise en oeuvre du procédé suivant la revendication 1, comprenant
- un appareil de commande de sac gonflable de protection (12) et un poste de mesure (13) relié à l'appareil de commande de sac gonflable de protection (12),
- une source de courant continu ou de tension continue (11) située dans l'appareil de commande de sac gonflable de protection (12) et servant à fournir un signal continu (I) au poste de mesure (13),
- des premiers moyens (C ; R1, R2, R3 ; SW1, SW2 ; 23) situés dans le poste de mesure (13) et servant à modifier le signal continu (I) en fonction des données à transmettre et
- des seconds moyens (R4 ; CO1, C02 ; 21) situés dans l'appareil de commande de sac gonflable de protection (12) et servant à constater et analyser des variations du signal continu (I) en tant que variations de courant,
caractérisé
- en ce que les premiers moyens comprennent un accumulateur d'énergie (C) qui est chargé d'une manière commandée pour l'augmentation du courant (I) et déchargé d'une manière commandée pour la diminution du courant (I).

8. Dispositif suivant la revendication 7, caractérisé en ce que l'accumulateur d'énergie est réalisé sous forme d'un condensateur (C).

9. Dispositif suivant la revendication 8, caractérisé en ce que le poste de mesure (13) est alimenté en tension d'alimentation (Vcc), en ce que le condensateur (C) est disposé dans le poste de mesure (13) d'une manière telle qu'en l'absence de transmission de données, il est chargé à une tension intermédiaire située entre 0 V et la tension d'alimentation (Vcc), en ce que les premiers moyens comprennent deux interrupteurs (SW1, SW2), en ce qu'au moyen d'un actionnement du premier interrupteur (SW1), le condensateur (C) provoque une augmentation du signal continu et en ce qu'au moyen d'un actionnement du second interrupteur (SW2), le condensateur (C) provoque un abaissement du signal continu.

10. Dispositif suivant la revendication 9, caractérisé en ce que le poste de mesure (13) comprend un régulateur de tension (22) servant à prélever une tension d'alimentation sur le signal continu, en ce que le poste de mesure (13) contient un diviseur de tension qui est soumis à la tension d'alimentation (Vcc) et qui comprend une première et une seconde résistances (R1, R3) qui sont réunies l'une à l'autre à un noeud (K1) servant de prise médiane, en ce que le condensateur (C) est raccordé entre l'entrée du régulateur de tension (22) et la prise médiane (K1) du diviseur de tension (R1, R3) et en ce que le premier interrupteur (SW1) est connecté en parallèle à la première résistance (R1) et le second interrupteur (SW2) connecté en parallèle à la seconde résistance (E3).

11. Dispositif suivant la revendication 10, caractérisé en ce que les interrupteurs (SW1, SW2) sont reliés à la prise médiane (K1) par l'intermédiaire d'une résistance commune (R2).

12. Dispositif suivant l'une des revendications 9 à 11, caractérisé en ce que les premiers moyens comprennent une unité de commande (23) qui commande les interrupteurs (SW1, SW2) en fonction de la série de données à transmettre.

13. Dispositif suivant la revendication 12, caractérisé en ce que le poste de mesure contient un détecteur (25) qui est relié à une unité de surveillance (24) et en ce que l'unité de surveillance (24) produit les séries de données à transmettre, et les transmet pour la transmission à l'unité de commande (23), en fonction de signaux provenant du détecteur (25).
